# EUROPÄISCHE PATENTSCHRIFT

(11) **EP 0 471 426 B1**
(45) Veröffentlichungstag und Bekanntmachung des Hinweises auf die Patenterteilung: **30.08.1995**
(21) Anmeldenummer: 91250165.7
(22) Anmeldetag: 22.06.1991
(51) Int. Cl.: B01D 46/16, B01D 45/16, B01D 45/12, B04C 3/06, B04C 3/00

(54) **Feststoff-Abscheider für feststoffbelastete Gasströmungen**
Separator for solids containing gasstreams
Séparateur de particules solides pour courants gazeux chargés de particules solides

(30) Priorität: 15.08.1990 DE 4026171
(43) Veröffentlichungstag der Anmeldung: 19.02.1992
(73) Patentinhaber: Dr. Küttner GmbH & Co. KG, D-45128 Essen (DE)
(72) Erfinder: Schott, Hans-Klaus, Dr.-Ing., W-4220 Dinslaken (DE)
(74) Vertreter: Hoormann, Walter, Dr.-Ing.

(56) Entgegenhaltungen:
- EP-A- 0 344 749
- CH-A- 489 266
- DE-A- 2 633 588
- DE-B- 1 938 695
- FR-A- 2 403 814
- FR-A- 2 642 662
- GB-A- 716 383
- GB-A- 884 750
- US-A- 4 179 273
- US-A- 4 311 494

## Beschreibung

Die Erfindung betrifft eine Vorrichtung zum Abscheiden von Feststoffpartikeln aus einer feststoffbelasteten Gaströmung (= "Abscheider"), insbesondere zum Ab- bzw. Ausscheiden von grobkörnigen Feststoffpartikeln, mit einem von der zu reinigenden Gasströmung zu durchströmenden, mit einem Feststoffauslaß versehenen Gehäuse, in dem ein im wesentlichen rotationssymmetrischer Leit- und Drallkörper mit Abstand zur Innenwandung des Gehäuses angeordnet ist, und welches an seinem Auslaßende mit einem Tauchrohr versehen ist.

Insbesondere in der mechanischen Verfahrenstechnik entstehen häufig feststoffbelastete Gasströmungen, wobei die Größe der Feststoffpartikel eine erhebliche Kornbandbreite umfaßt. Derartige Gasströmungen können schon unter ökologischen Gesichtspunkten nicht ohne vorherige Reinigung in die Umwelt abgelassen werden. Es kommt hinzu, daß in der Regel zumindest ein erheblicher Teil der Feststoffe (nämlich regelmäßig der grobkörnigere Anteil) als Rohstoff wiederverwendbar wäre, wenn es gelingt, diesen von der Gasströmung zu separieren und aus dieser auszuschleusen.

So besteht bspw. und insbesondere im wärmetechnischen Bereich die Problematik, nachgeschaltete Anlagenkomponenten wie z.B. Brennkammern, Wärmetauscher, Filter u.dgl. vor Verschlackung, sog. Fouling und ständig schlechter werdendem Wärmeübergang/Wirkungsgrad zu schützen. Ein konkreter Fall dieser Art liegt bspw. hinter dem Kopf eines Kupolofens vor.

Ein weiterer ähnlicher technischer Fall liegt bzgl. des Abgasstromes von Sandaufbereitungsanlagen in/fur Gießereien oder Gießerei-Entstaubungsanlagen vor, wobei sich dort im Abgasstrom neben einem Feinkornanteil mit einer Partikelgröße < 90 »m ein erheblicher Grobkornanteil mit einer Partikelgröße > 100 »m befindet, der bei Rückgewinnung durch Ausschleusung aus dem Abgasstrom und Trennung vom Feinkornanteil in wirtschaftlich vorteilhafter Weise wiederverwendbar ist und damit zugleich unter Entlastung der Deponien die zu deponierende Feststoffmenge erheblich reduziert.

Im übrigen ist es bekannt, daß sich in Stäuben, die in Hochofen-, Kupolofen- und Stahlwerksanlagen entstehen, Schadstoffe wie Alkalien, Zn und Pb insbesondere im Feinkornanteil (Korngröße 0 - ca. 70 »m) anreichern, während der Grobkornanteil mit größerer Partikelgröße demgegenüber schadstoffarm und demgemäß - nach entsprechender Trennung vom Feinkornanteil - unter erheblich erleichteter Aufbereitung wiederverwendbar zu machen ist.

Um Feststoffe aus Gasströmungen zu separieren, sind sog. Zyklone bekannt, bei denen es sich grundsätzlich im wesentlichen um im wesentlichen rotationssymmetrische Gefäße mit vertikaler Symmetrieachse handelt, in welche die zu reinigende Gasströmung im wesentlichen tangential eingeleitet wird, um ihr einen Drall (um die vertikale Längs- bzw. Symmetrieachse) des Zyklons zu geben, wobei das Gas mehr oder weniger schraubenförmig um die Symmetrieachse im Zyklon nach unten strömt und dabei durch Verlangsamung aufgrund Wandflächenreibung etc. Feststoffe ausscheidet, die dem Zyklon dann am unteren Endabschnitt über einen Feststoffauslaß entnommen werden können, während der gereinigte Gasstrom über einen Gasauslaß nach oben aus dem Zyklon austritt. Derartige Zyklone erfordern nicht nur einen erheblichen Raumbedarf, insbesondere hinsichtlich ihrer erforderlichen Höhe, sondern sind auch relativ aufwendig und zudem ist es mit ihnen in der Regel nicht möglich, (nur) bestimmte Kornfraktionen auszuscheiden, wie dieses aus den oben angedeuteten Gründen häufig höchst vorteilhaft ist.

Darüber hinaus ist ein sog. Funkenabscheider bekannt, welcher konstruktiv merkmalsmäßig der Gattung der hier in Rede stehenden Vorrichtung (Abscheider) entspricht, jedoch die an einen derartigen Abscheider zu stellenden Anforderungen ebenfalls keineswegs erfüllt. Insbesondere gestattet der bekannte Funkenabscheider keinerlei Einstellbarkeit der Rotationsgeschwindigkeit, der auszuscheidenden Partikelgröße u.dgl.

Die bekannten Abscheideorgane arbeiten in relativ engen Grenzen ihrer Betriebsparameter, so daß eine Veränderung der Gasmenge und/oder der Gastemperatur sowie der Staubbeladung des Gases zu unterschiedlicher Abscheideleistung und Veränderung der Trenngradkurve in Steilheit und mittlerer Partikelgröße führen.

Für bestimmte technische Anwendungsfälle, wie z.B. der Einsatz hinter dem Kupolofenkopf, ist es aber wünschenswert, daß sich die Abscheideleistung bei Änderung der Betriebsparameter nicht wesentlich verändert.

Ein gattungsgemäßer Abscheider ist in US-A-4 311 494 beschrieben.

Der vorliegenden Erfindung liegt die Aufgabe zugrunde, eine Vorrichtung (= Abscheider) der eingangs beschriebenen Gattung zu schaffen, mit welcher es möglich ist, bestimmte Kornfraktionen (auch ggf. veränderbar) aus einer schadstoffbelasteten Gasströmung abzuscheiden, insbesondere grobkörnigere Kornfraktionen, um diese als Wertstoffe zurückzugewinnen und weiterverwenden zu können. Dabei soll der erfindungsgemäße Abscheider bei unterschiedlichen Druck- und Temperaturbedingungen sowie unterschiedlichen Gasmengen und unterschiedlicher Beladung des Gases mit Feststoff (ohne weiteres) einsetzbar sein, einen möglichst geringen Druckverlust erzeugen, und nicht nur äußerst preiswert herstellbar, sondern auch ohne weiteres in bereits vorhandenen Anlagen nachrüstbar sein, und - insbesondere in Relation zu Zyklonen - eine relativ geringe Bauhöhe aufweisen.

Die Lösung dieser Aufgabe wird durch die Merkmale des Anspruchs 1 gegeben.

Es hat sich als zweckmäßig erwiesen, wenn das Gehäuse einen (Erweiterungs-)Abschnitt aufweist, dessen Querschnittsfläche sich in Strömungsrichtung erweitert, um auf diese Weise die Geschwindigkeit der Gasströmung und damit den aufgeprägten Drall beeinflussen zu können, und dabei/damit die Abscheidung zu begünstigen.

Mit einer derartigen im wesentlichen konischen Erweiterung des Gehäuses ist nicht notwendigerweise eine Verlangsamung der Gasströmung verbunden, da der Drallkörper bei dem erfindungsgemäßen Abscheider bevorzugt im Erweiterungsabschnitt angeordnet und seinerseits gemäß einer bevorzugten Ausgestaltung der vorliegenden Erfindung im wesentlichen kegelförmig ausgebildet ist. Da die Strömungsgeschwindigkeit vom freien Strömungsquerschnitt abhängt und dieser bei einem im wesentlichen konischen Drallkörper, der in einem sich erweiternden Gehäuseabschnitt angeordnet ist, ersichtlich durchaus bspw. auch konstant sein kann, kann die Gasströmung mithin ggf. auch in Strömungsrichtung konstant verlaufen oder sich - wenn dieses aus bestimmten Gründen zweckmäßig erscheint - sogar vergrößern, nämlich dann, wenn der Strömungsquerschnitt aufgrund der geschilderten geometrischen bzw. konstruktiven Umstände in Strömungsrichtung abnimmt.

Es hat sich weiterhin als höchst vorteilhaft erwiesen, wenn die Einstecktiefe des Tauchrohres veränderbar bzw. einstellbar ist, da diese Maßnahme die Korngröße der abgeschiedenen Feststoffpartikel beeinflußt. Überraschenderweise wird durch die Veränderung der Einstecktiefe des Tauchrohres mit zunehmender Einstecktiefe der reinen Drallabscheidung eine sog. "Totraumabscheidung" durch die scharfe Umlenkung der Gasströmung in der durch das Tauchrohr gebildeten "Windschatten"-Zone überlagert, die entscheidenden Einfluß auf die Abscheidekorngröße und die Steilheit der Trenngradkurve hat.

Weiterhin hat sich unerwarteterweise gezeigt, daß das Abscheideergebnis im wesentlichen unabhängig ist vom Gasmassenstrom und seiner Feststoffbeladung.

Um den Verlauf des freien Strömungsquerschnittes den jeweiligen Bedingungen unter den obigen Gesichtspunkten möglichst optimal anpassen zu können, kann der Drallkörper in Richtung der (Längs-)Symmetrieachse relativ zum Gehäuse verschiebbar bzw. einstellbar sein.

Bevorzugte Ausgestaltungen der vorliegenden Erfindung sind in Unteransprüchen beschrieben.

Die Erfindung ist nachstehend an einem Ausführungsbeispiel unter Bezugnahme auf eine Zeichnung weiter erläutert. Es zeigt:
- Fig. 1: einen erfindungsgemäßen Abscheider in einer Seitenansicht, teilweise gemäß der Schnittlinie I-I in Fig. 2 im Schnitt; und
- Fig. 2: eine Draufsicht auf den Abscheider gemäß Fig. 1 in Richtung des Pfeiles II in Fig. 1 gesehen.

Die Zeichnung zeigt einen im ganzen mit 1 bezeichneten Abscheider zum Abscheiden von grobkörnigen Feststoffpartikeln aus einer feststoffbelasteten Gasströmung, die gemäß dem Pfeil 2 in den Abscheider 1 einströmt und diesen durchströmt.

Der Abscheider 1 weist ein im ganzen mit 3 bezeichnetes Gehäuse auf, an dessen Endabschnitt ein Feststoffauslaß 4 angeordnet ist.

In dem Gehäuse 3 ist ein im wesentlichen rotationssymmetrischer Leit- und Drallkörper 5 angeordnet, und zwar mit (sich änderndem) Abstand a zur Innenwand 3' des Gehäuses 3.

An seinem Auslaßende ist der Abscheider 1 mit einem Tauchrohr versehen.

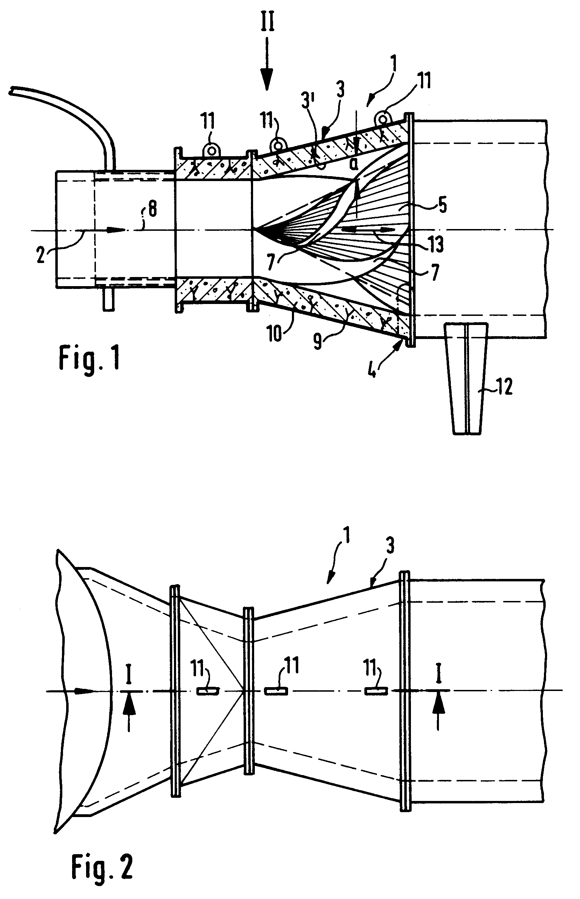

Wie aus Fig. 1 erkennbar ist, ist der Drallkörper 5 kegelförmig ausgebildet und an seiner Außenseite mit vier schneckenförmigen Wendeln 7 versehen, durch welche der feststoffbelastete Gasstrom in eine Rotation um die Abscheider-Symmetrieachse 8 versetzt wird, wobei diese im wesentlichen horizontal verläuft. Die Wendeln 7 sind im wesentlichen mit gleicher Teilung auf dem Drallkörper 5 angeordnet.

Wie weiterhin aus der Zeichnung ohne weiteres erkennbar ist, weist das Gehäuse 3 einen kegelstumpfförmigen Erweiterungsabschnitt 9 auf, dessen freie Querschnittsfläche sich in Strömungsrichtung 2 erweitert, wobei der Erweiterungsabschnitt 9 den Drallkörper 5 umgibt. Der Drallkörper 5 ist in Richtung der (Längs-)Symmetrieachse 8 relativ zum Gehäuse 3 verschiebbar bzw. einstellbar. Entsprechendes gilt im übrigen auch für die Einstecktiefe des Tauchrohres.

Es sei noch darauf verwiesen, daß die Innenseite des Gehäuses 3 mit einer festen Ausmauerung 10 versehen ist, um den Abscheider 1 auch bei höheren Temperaturen problemlos einsetzen zu können.

Bei dem konkreten Anwendungsfall für den in der Zeichnung beispielhaft dargestellten, erfindungsgemäßen Abscheider 1 handelt es sich um einen Einsatz an einer Kupolofenanlage, und zwar ist der Abscheider 1 dem Kopf des betreffenden Kupolofens nachgeordnet, um den Grobkornanteil > 100 »m gezielt aus dem Abgas ausscheiden zu können und diesen nach entsprechender weiterer Aufbearbeitung einer Wiederverwendung zuzuführen, wobei dieser Grobkornanteil - wie oben ausgeführt - schadstoffarm ist.

Eine Optimierung des Betriebes erfolgt beim Einfahren der Anlage, wobei der Drallkörper 5 wie bereits erwähnt gemäß dem Doppelpfeil 13 relativ zum Gehäuse 3 verschiebbar bzw. einstellbar ist, so daß der freie Strömungsquerschnitt zwischen Drallkörper 5 einerseits und Innenwand 3' des Gehäuses 3 ebenso wie die Eintauchtiefe des Tauchrohres veränderbar ist.

## Patentansprüche

1. Vorrichtung zum Abscheiden von insbesondere grobkörnigen Feststoffpartikeln aus einer feststoffbelasteten Gasströmung, mit einem von der Gasströmung zu durchströmenden Gehäuse (3), welches in seinem Auslaßende mit einem in das Gehäuse ragenden Tauchrohr für die abströmende Gasströmung sowie mit einem gesonderten Feststoffauslaß (4) versehen ist, und welches einen sich in Strömungsrichtung (2) konisch erweitertenden Gehäuseabschnitt (9) aufweist, in dem ein rotationssymmetrische Leit- und Drallkörper (5) mit sich in Strömungsrichtung (2) kegelförmig vergrößerndem Querschnitt mit Abstand zum Gehäuse angeordnet ist, dadurch gekennzeichnet, daß der Leit- und Drallkörper an seiner Außenseite mit wenigstens einer schneckenförmigen Wendel (7) versehen ist, mittels welcher die Gasströmung zwecks Fliehkraftabscheidung von Feststoffpartikeln in Rotation zu versetzen ist, und daß die Einstecktiefe des Tauchrohres veränderbar ist.

2. Vorrichtung nach Anspruch 1, dadurch gekennzeichnet, daß der Leit- und Drallkörper (5) an seiner Außenseite mit mehreren Wendel (7) versehen ist, die im wesentlichen mit gleicher Teilung angeordnet sind.

3. Vorrichtung nach einem oder mehreren der vorhergehenden Ansprüche, dadurch gekennzeichnet, daß der Leit- und Drallkörper (5) in Richtung der (Längs-)Symmetrieachse (8) relativ zum Gehäuse (3) einstellbar ist.

4. Vorrichtung nach einem oder mehreren der vorhergehenden Ansprüche, gekennzeichnet durch eine im wesentlichen horizontale (Längs-)Symmetrieachse (8).

5. Vorrichtung nach einem oder mehreren der vorhergehenden Ansprüche, dadurch gekennzeichnet, daß die Innenseite des Gehäuses (3) mit einer feuerfesten Außenmauer (10) od.dgl. versehen ist.

6. Vorrichtung nach einem oder mehreren der vorhergehenden Ansprüche, dadurch gekennzeichnet, daß der Feststoffauslaß im wesentlichen tangential am Gehäuse (3) angeordnet ist.

## Claims

1. Device for separating in particular coarse-grained solid particles from a solids-laden gas stream, with a housing (3) through which the gas stream is to flow and which is provided in its outlet end with a plunge pipe, which projects into the housing, for the gas stream flowing off and with a separate solids outlet (4), which housing comprises a housing section (9) which widens conically in the direction of flow (2) and in which a rotationally symmetrical guide and spin body (5) with a cross section which increases conically in the direction of flow (2) is arranged at a spacing from the housing,
characterized in that the guide and spin body is provided on its outside with at least one helical spiral (7), by means of which the gas stream is to be made to rotate for the purpose of separating solid particles by centrifugal force, and that the depth of insertion of the plunge pipe is variable.

2. Device according to claim 1, characterized in that the guide and spin body (5) is provided on its outside with a plurality of spirals (7) which are arranged essentially at the same pitch.

3. Device according to one or more of the preceding claims, characterized in that the guide and spin body (5) can be adjusted relative to the housing (3) in the direction of the (longitudinal) axis of symmetry (8).

4. Device according to one or more of the preceding claims, characterized by an essentially horizontal (longitudinal) axis of symmetry (8).

5. Device according to one or more of the preceding claims, characterized in that the inside of the housing (3) is provided with a fireproof outer wall (10) or similar.

6. Device according to one or more of the preceding claims, characterised in that the solids outlet is arranged essentially tangentially to the housing (3).

## Revendications

1. Dispositif pour la séparation de particules solides, en particulier de gros grains, à partir d'un flux gazeux chargé de particules solides, comportant un carter (3) à travers lequel passe le flux gazeux, ce dernier étant muni au niveau de son extrémité de sortie d'un tube plongeur, se dressant dans le carter, pour permettre l'écoulement du flux gazeux, ainsi que d'une sortie séparée (4) destinée aux particules solides, et comportant un partie (9) de carter qui s'élargit de manière conique dans la direction du flux (2), dans laquelle est agencé un élément de guidage rotatif (5) à symétrie circulaire, situé à distance du carter, ayant une section transversale qui augmente dans la direction du flux en formant un cône, caractérisé en ce que l'élément de guidage rotatif comporte au niveau de sa face externe au moins une hélice (7) en forme de vis sans fin, par l'intermédiaire de laquelle le flux gazeux est entraîné en rotation dans le but d'obtenir une centrifugation des particules solides, et en ce que l'on peut modifier la profondeur d'encastrement du tube plongeur.

2. Dispositif selon la revendication 1, caractérisé en ce que l'élément de guidage rotatif (5) comporte au niveau de sa face externe plusieurs hélices (7), qui sont agencées selon un écartement à peu près analogue.

3. Dispositif selon l'une quelconque des revendications précédentes, caractérisé en ce que l'élément de guidage rotatif (5) peut être ajusté par rapport au carter (3) dans la direction de son axe (longitudinal) de symétrie (8).

4. Dispositif selon l'une quelconque des revendications précédentes, caractérisé en ce qu'il comporte un axe (longitudinal) de symétrie (8) à peu près horizontal.

5. Dispositif selon l'une quelconque des revendications précédentes, caractérisé en ce que la face intérieure du carter (3) est munie d'une paroi extérieure réfractaire.

6. Dispositif selon l'une quelconque des revendications précédentes, caractérisé en ce que la sortie des particules solides est disposée de manière à peu près tangentielle au carter (3).
